# EUROPEAN PATENT APPLICATION

(11) **EP 4 401 026 A1**
(43) Date of publication of application: **17.07.2024**
(21) Application number: 22904464.9
(22) Date of filing: 31.10.2022
(51) Int. Cl.: G06Q 20/38, G06Q 20/06, G06Q 20/36, H04L 67/1097, H04L 67/104, H04L 9/08, H04L 9/32, H04L 9/00

(54) **METHOD FOR CONTROLLING BLOCKCHAIN-BASED SHARED ASSET TRANSACTION SYSTEM, AND RECORDING MEDIUM AND SYSTEM FOR PERFORMING SAME**

(30) Priority: 08.12.2021 KR 20210175188
(71) Applicant: Korea University Research and Business Foundation, Seoul 02841 (KR)
(72) Inventor: IN, Hoh Peter, Seoul 04385 (KR); CHOI, Jihyok, Seoul 05348 (KR)
(74) Representative: RGTH
(86) International application number: PCT/KR2022/016803
(87) International publication number: WO 2023/106630

(57) **Abstract**

Provided with a blockchain-based shared asset trading system for tokenizing and trading a shared asset comprising a plurality of sharer terminals, provided on a sharer side, for transmitting an original warranty containing the appraisal result of the shared asset and transmitting a warranty in which the sharer's signature has been entered to the original warranty; a blockchain network for receiving and storing the original warranty in a smart contract block, issuing a token based on the smart contract block and generating an electronic wallet in which the token is stored; and an electronic wallet management server for receiving the warranty in which the signature has been entered from the plurality of sharer terminals and transmitting a transaction including the warranty in which the signature has been entered to the original warranty.

## Description

### Technical Field

The present invention relates to a method of controlling a blockchain-based shared asset trading system, a recording medium and a system for performing the same, and more particularly, to a method of controlling a blockchain-based shared asset trading system for tokenizing and trading a shared asset, a recording medium and a system for performing the same.

### Background Art

Blockchain is a data reprehension prevention technology based on distributed computing technology in which data subject to managing are stored in a chain-type link-based distributed data storage environment where small-scale data called 'blocks' are created by a peer-to-peer (P2P) scheme. In the blockchain, since individual transactions are written in a decentralized electronic ledger, a server can be operated on computers of users which execute a blockchain software, enabling free trades between individuals without a central bank.

In order to trade a tokenized shared asset that a plurality of sharers share according to their share ratio, the consent of all sharers is required. Therefore, there is a need for a blockchain-based shared asset trading system in which the tokenized shared asset can be traded only when all sharers sign with their private keys and verify it as valid in a blockchain network.

### DISCLOSURE OF INVENTION

### Technical Problem

The technical problem to be solved by the present invention is to provide a method of controlling a blockchain-based shared asset trading system capable of tokenizing a shared asset in a blockchain server and trading the token in a market server interlocked with the blockchain server, and a recording medium and system for performing the same.

In addition, the technical problem to be solved by the present invention is to provide a method of controlling a blockchain-based shared asset trading system in which the token can be traded only when all sharers sign with their private keys.

### Technical Solution

According to one aspect of the present invention, a blockchain-based shared asset trading system for tokenizing and trading a shared asset may comprise a plurality of sharer terminals, provided on a sharer side, for transmitting an original warranty containing the appraisal result of the shared asset and transmitting a warranty in which the sharer's signature has been entered to the original warranty; a blockchain network for receiving and storing the original warranty in a smart contract block, issuing a token based on the smart contract block and generating an electronic wallet in which the token is stored; and an electronic wallet management server for receiving the warranty in which the signature has been entered from the plurality of sharer terminals and transmitting a transaction including the warranty in which the signature has been entered and a token trading request to the blockchain network.

In addition, the system may further comprise a distributed storage in which the original warranty is stored, wherein the distributed storage includes a local storage, a IPFS and a cloud, and is selected as any one of the local storage, the IPFS and the cloud by the at least one sharer terminals.

In addition, the electronic wallet management server may comprise a transaction generating unit configured to, when the number of the sharers are two, receive, from a sharer terminal provided on a sharer side, the share information of the shared asset of a first sharer side and a warranty in which the signature of the first sharer side has been entered so as to generate a first transaction, transmit the share information of the shared asset of the first sharer side and the warranty in which the signature of the first sharer side has been entered to a sharer terminal provided on a second sharer side, and receive, from the sharer terminal provided on the second sharer side, the share information of the shared asset of the second sharer side and a warranty in which the signature of the second sharer side has been entered so as to generate a second transaction; a transaction combining unit configured to combine the first transaction and the second transaction; and a communication unit configured to transmit the transaction combined by the transaction combining unit to the blockchain network.

In addition, when the number of the sharers exceed two, the transaction generating unit repeatedly performs a process of generating the transactions so as to generate transactions for all sharers, and wherein the transaction combining unit combines a plurality of transactions generated by the transaction generating unit.

In addition, the signature is entered with a private key to the original warranty, and the plurality of sharer terminals transmit a public key to the blockchain network.

In addition, the blockchain network decrypts the transaction combined by the transaction combining unit with the public key, compares the decrypted warranty with the warranty stored in the smart contract block to verify whether they are the same, executes, if they are the same, a transaction for token trading and transmits the token to a buyer's wallet address.

In addition, the at least one sharer terminals select the range of intellectual property rights so that the rights are transferred to buyers only within a range of preset intellectual property rights.

According to other aspect, a method of controlling a blockchain-based shared asset trading system for trading by tokenizing a shared asset may comprise the steps of: transmitting an original warranty containing the appraisal result of the shared asset and transmitting a warranty in which the sharer's signature has been entered to the original wraanty; receiving and storing, by a blockchain network, the original warranty in a smart contract block, issuing a token based on the smart contract block and generating an electronic wallet in which the token is stored; and receiving the warranty in which the signature has been entered and transmitting a transaction including the warranty in which the signature has been entered and a token trading request to the blockchain network.

In addition, the step of receiving the warranty in which the signature has been entered and transmitting a transaction including the warranty in which the signature has been entered and a token trading request to the blockchain network may comprise when the number of the number of the sharers are two, receiving, from a sharer terminal provided on a first sharer side, the share information of the shared asset of the first sharer side and a warranty in which the signature of the first sharer side has been entered so as to generate a first transaction; transmitting the share information of the shared asset of the first sharer side and the warranty in which the signature of the first sharer side has been entered to a sharer terminal provided on a second sharer side; receiving, from the sharer terminal provided on the second sharer side, the share information of the shared asset of the second sharer side and a warranty in which the signature of the second sharer side has been entered so as to generate a second transaction; combining the first transaction and the second transaction; and transmitting the combined first and second transactions to blockchain network.

In addition, the step of receiving the warranty in which the signature has been entered and transmitting a transaction including the warranty in which the signature has been entered and a token trading request to the blockchain network may comprise when the number of the sharers exceed two, repeatedly performing a process of generating the transactions so as to generate transactions for all sharers; combining the generated plurality of transactions; and transmitting the combined transaction to the blockchain network.

In addition, the signature is entered with a private key to the original warranty, and the plurality of sharer terminals transmit a public key to the blockchain network.

In addition, the method may further comprise the steps of: decrypting the combined first and second transactions with the public key; comparing the decrypted warranty with a warranty stored in the smart contract block to verify whether they are the same; if they are the same, executing a transaction for token trading and transmitting the token to a buyer's wallet address.

According to another aspect, a computer program for performing a method of controlling the blockchain-based shared asset trading system may be recorded in a computer-readable storage medium.

### Advantageous Effects

According to one aspect of the present invention described above, since tokens can be traded only when all sharers sign with their private keys, accidents due to hacking can be prevented and the risk of asset loss can be reduced.

### Brief Description of the Drawings

Fig. 1 is a conceptual diagram illustrating a blockchain-based shared asset trading system according to an embodiment of the present invention.
Fig. 2 is a control block diagram of an electronic wallet management server.
Fig. 3 is an overall flowchart illustrating a method of controlling a blockchain-based shared asset trading system according to an embodiment of the present invention.
Fig. 4 is a diagram illustrating a process in which a sharer side signs with a private key.
Fig. 5 is a diagram of generating a transaction;

### Best Mode for Carrying Out the Invention

The following detailed description of the present invention refers to the accompanying drawings which illustrate, by way of illustration, specific embodiments in which the present invention may be implemented. These embodiments are described in detail for one skilled in the art to sufficiently implement the present invention. It should be understood that the various embodiments of the present invention are different from each other but are not necessarily mutually exclusive. For example, specific shapes, structures, and characteristics described herein may be implemented in another embodiment without departing from the spirit and scope of the invention in connection with one embodiment. Additionally, it should be understood that the location or arrangement of individual components in each disclosed embodiment may be changed without departing from the spirit and scope of the invention. Accordingly, the detailed description to be described below is not to be taken in a limiting sense, and the scope of the present invention, if properly described, is limited only by the appended claims, along with all equivalents as claimed by the claims. Like reference numbers in the drawings indicate the same or similar functions throughout the various aspects.

Hereinafter, preferred embodiments of the present invention will be described in more detail with reference to the drawings.

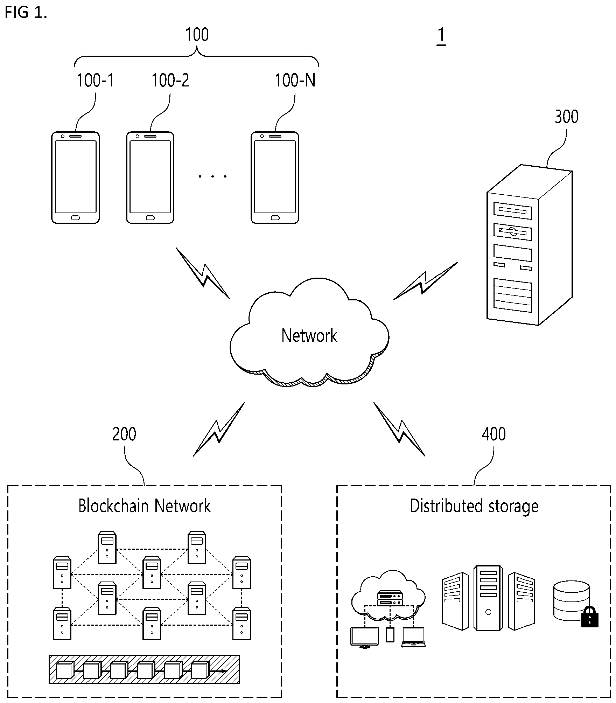

Figure 1 is a conceptual diagram illustrating a blockchain-based asset trading system according to an embodiment of the present invention.

The blockchain-based shared asset trading system 1 may comprise include a plurality of sharer terminals 100, a blockchain network 200, an electronic wallet management server 300 and a distributed storage 400.

The blockchain-based shared asset trading system 1 can tokenize the asset based on the original warranty having the appraisal results of the shared asset contained therein. Tokenizing the asset may mean generating an exchange token that can be used to trade the asset. The price of the token can be determined based on the original warranty having the appraisal results of the shared asset contained therein.

Here, the asset may include real asset and digital asset. The real asset may include real estate, artworks, luxury goods, etc., and the digital asset may include images and audio files, cryptocurrency, industrial property rights such as patents, trademarks, copyrights and publicity rights, game items and game characters, etc. The digital asset may further include electronic documents of exchange value, etc., but are not limited thereto.

The plurality of sharer terminals 100 may be computing devices such as a desktop PC, a laptop PC, a smart phone, a tablet PC, etc. owned by sharers who want to use the blockchain-based shared asset trading system 1 of the present invention.

The plurality of sharer terminals 100 may receive, from an expert terminal, a warranty containing appraisal information on shared asset, ownership proof information of a seller and warranty signature information of an expert. Although it has been described above that the expert terminal performs appraisal on shared asset and generates a warranty, it goes without saying that the expert can perform appraisal on shared asset, generate a warranty and enter the warranty to the expert terminal.

In addition, the expert terminal may receive, from the plurality of sharer terminals 100, a signal for requesting access to expert's personal information, qualification certificate and career information inspection. The expert terminal may transmit personal information, qualification certificate and career information of the expert to the plurality of sharer terminals 100. In addition, the expert terminal may further include an issuing agency server so that the issuing agency server transmits the expert's qualification certificate and career information to the plurality of sharer terminals 100.

The plurality of sharer terminals 100 transmit the original warranty containing the appraisal results on shared asset and share information of the sharers to the blockchain network 200, and the plurality of sharer terminals 100 transmit the warranty, to which the signatures of the sharers of the original warranty have been entered, to the blockchain network 200 and an electronic wallet management server 300. Here, the share information may be a preset sharer's share ratio, and the sum of share ratio of the plurality of sharers is 100%.

The distributed storage 400 may receive and store the warranty for asset from the plurality of sharer terminals 100.

The distributed storage 400 may store the warranty of the asset as a file, and the file may be an image file or an audio file. Here, the image file may be stored in the format of JPEG, BMP or TIFF, and the audio file may be stored in the format of WAV, MP3, MIDI, PTX or M4A. However, the files are not limited to such a format.

The distributed storage 400 can be provided as local storage, IPFS, or cloud. Here, at least one sharer terminal 100 may transmit the file of asset to be stored in any one of local storage, IPFS (Inter Planetary File System) and cloud. The local storage can receive the file by URL or P2P scheme (PEER-TO-PEER), the IFPS can receive the file by URL going through GATEWARY and unique hash value, and the cloud can receive the file by URL or P2P scheme (PEER-TO-PEER). Here, the local storage may mean a browser in which data is stored in the form of a pair of a key (KEY) and a value (VALUE), and the IPFS 21 may mean a protocol for storing data a distributed file system and sharing the data and the cloud may mean allowing to access data, software and various computer resources through the Internet, without putting them on hardware such as a PC or smartphone owned by the user.

Here, the distributed storage 400 may receive a file of shared asset from at least one sharer terminal 100 and store them as a file or generate an encrypted URL address and store them in a URL address. In addition, the distributed storage 400 may also transmit asset information and metadata included in the file. The asset information included in the file may include the size of the warranty file of the asset, the date of generation, URL address and the like. The metadata may mean a wavelength, frequency, color, appearance, pixel, work name, artist name, link where the work is stored, path, past trading history, etc. of the asset prepared as an audio file. Any one of local storage, IPFS, and cloud is selected by at least one sharer terminals 100.

The blockchain network 200 is composed of a plurality of nodes and provides a service for managing the asset. A warranty of an asset may be received from the distributed storage 400 or the plurality of sharer terminals 100 and stored safely. In addition, the plurality of sharer terminals 100, the distributed storage 400 and the electronic wallet management server 300 may participate as one node among a plurality of nodes of the blockchain network 200. Here, the plurality of nodes may execute a smart contract for a transaction for tokenization of asset submitted through the plurality of sharer terminals 100 and record it in one or more blocks.

In addition, the blockchain network 200 issues tokens by tokenizing the asset based on the smart contract block. The tokens can be classified into a fungible token and a non-fungible token. The fungible token can be exchanged for other tokens of the same type, but the non-fungible tokens cannot be exchanged for other tokens of the same type. The tokens of the present invention may be made of a non-fungible token (NFT) of the ERC-721 and ERC-1155 standards of a blockchain network, but is not limited thereto.

Here, the information being recorded in the smart contract block can be composed of a basic information and an extension information. The basic information may be a sharer's information, and an asset type indicating whether it is a real asset or a digital asset. The extension information may include the date of generation of the asset, the content of the warranty of the asset, the information of the guarantor of the asset, whether the ownership of the asset is divided, the information of ownership division ratio or the intellectual property rights information granted to the asset.

For example, if the real asset is real estate, the blockchain network 200 may record seller information as basic information in the smart contract block. In addition, the blockchain network 200 may record, as extension information, the contractor of the real estate contract, the hash value of the contract file, the number of contract pages, the date of the contract, the signature of the contractor, the date of generation of the contract file, the contract file, or route information, in which the signature image of the seller/buyer contract has been stored, in the smart contract block and generate tokens based on them.

As another example, the blockchain network 200 may include seller information as basic information if a digital asset is a copyright such as a sound source. In addition, the blockchain network 200 may include, as extension information, the hash value of the MP3 file, the singer of the sound source, the composer/lyricist of the corresponding sound source, the date of generation of the sound source, the profit ratio, the warranty, or the warrant agency information, record them in the smart contract block and generate tokens based on them.

In addition, the blockchain network 200 may generate an online electronic wallet. The electronic wallet can act like an electronic bank account functioning as each sharer's unique personal bank account so as to store and withdraw the tokens. Here, the electronic wallet may be that provided with an integrated API and interlocked with web wallet applications such as METAMASK, Klay, and MyCrypto, etc.

The electronic wallet management server 300 is a server capable of collectively managing the electronic wallet of each of a plurality of sharers. The electronic wallet management server 300 receives the warranty with the signatures of the sharers from the plurality of sharer terminals 100, and transmits the transaction including the warranty with the signatures of the sharers and a token trading request signal to the blockchain network 200.

The blockchain network 200 verifies whether the received transaction is valid, and if the verification result is valid, the blockchain network 200 executes a transaction for token trading and transmits the token to the buyer's wallet address.

Here, at least one sharer terminals 100 may select the range of intellectual property rights from the sharer so that the rights of shared asset are transferred to the buyer only within the preset range of intellectual property rights. The preset range of intellectual property rights may include reproduction rights, public performance rights, broadcast rights, transmission rights, exhibition rights, distribution rights, rental rights and creation rights of secondary works. These are examples only and are not limited thereto.

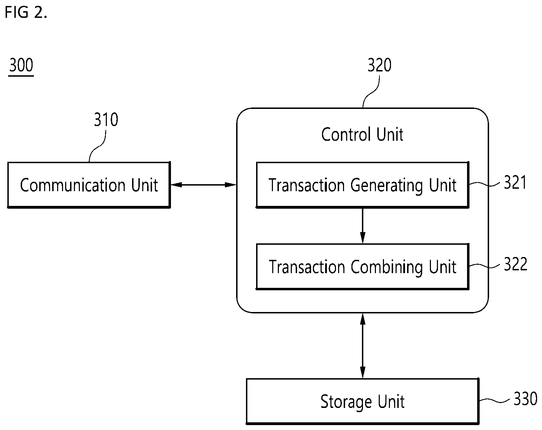

Fig. 2 is a control block diagram of the electronic wallet management server.

The electronic wallet management server 300 may include a communication unit 310, a control unit 320, and a storage unit 30.

The communication unit 310 may communicate with the plurality of sharer terminals 100 to receive a warranty having the sharer's signature entered thereto, and communicate with the blockchain network 200 to transmit a transaction.

The control unit 320 generates a transaction for the token trading request by using the warranty having the sharer's signature entered thereto. The control unit 320 may include a transaction generating unit 321 and a transaction combining unit 322.

Transaction generating unit 321, when the number of the plurality of sharers are two, receives the share information of the shared asset of the first sharer and the warranty having the signature of the first sharer entered thereto from the sharer terminal 100 provided on the first sharer and generates the first transaction. In addition, the transaction generating unit 321 transmits the share information of the shared asset of the first sharer and the warranty having the signature of the first sharer entered thereto to the sharer terminal 100 provided on the second sharer and receives the share information of the shared asset of the second sharer and the warranty having the signature of the second sharer entered thereto to generate the second transaction.

The transaction combining unit 322 combines the first transaction and the second transaction.

The communication unit 310 transmits the transaction combined by the transaction combining unit 322 to the blockchain network 200. The storage unit 330 may store the transactions generated by the transaction generating unit 321 and store the transaction combined by the transaction combining unit 322.

In addition, if there are more than two sharers, the transaction generating unit 321 repeatedly performs the process of generating the above-described transaction based on the share information of the share asset of the sharer and the warranty having the signature entered thereto so as to generate transactions of all sharers. The transaction combining unit 322 combines the plurality of transactions generated by the transaction generating unit 321. The communication unit 310 transmits the combined transactions to the blockchain network 200.

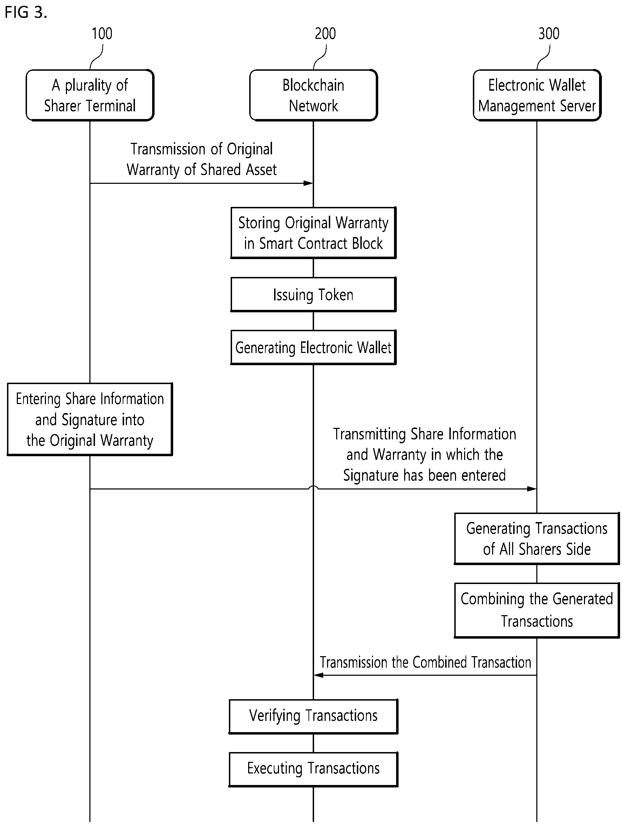

Fig. 3 is an overall flowchart illustrating a method controlling of a blockchain-based shared asset trading system according to an embodiment of the present invention.

A method of controlling the blockchain-based shared asset trading system according to an embodiment of the present invention is carried out on substantially the same configuration as the block chain-based shared asset trading system 1 in FIG. 1, so the same reference numerals as the block chain-based shared asset of FIG. 1 are given to the same components as those of the trading system 1, and repeated descriptions therefor will be omitted.

The plurality of sharer terminals 100 transmit original warranty of shared asset to the blockchain network 200. The blockchain network 200 stores the original warranty in the smart contract block. The blockchain network 200 issues the token based on the smart contract and generates the electronic wallet. Here, the price of the issued token may be the price information of the asset described in the warranty.

The plurality of sharer terminals 100 enters the share information and signature to the original warranty. The plurality of sharer terminals 100 transmit the share information and the warranty having the signature entered thereto to the electronic wallet management server 300.

The electronic wallet management server 300 generates transactions for all sharers and combines all generated transactions. In addition, the electronic wallet management server 300 transmits the combined transactions to the blockchain network 200.

The blockchain network 200 verifies the received transactions, and if it is determined to be valid as a result of the verification, the transactions are executed and the tokens are sent to the buyer's wallet address.

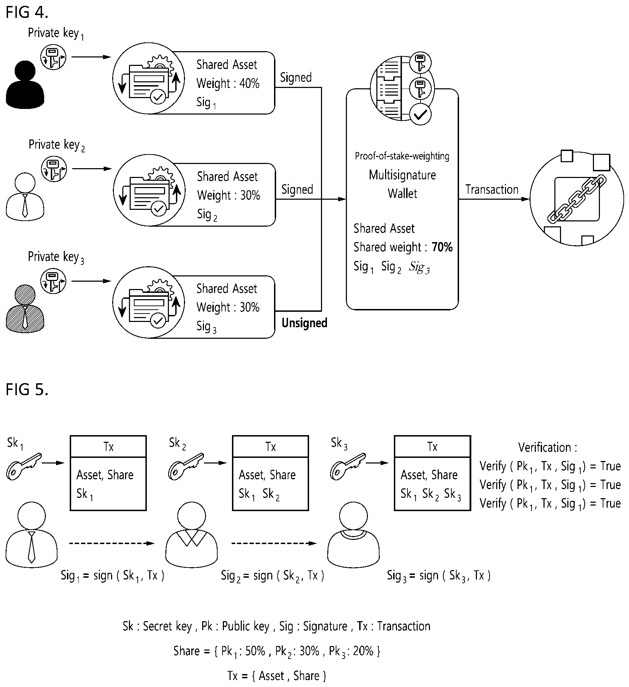

Fig. 4 is a diagram illustrating a process in which a sharer signs with a private key.

This is a diagram illustrating an example of a case where when the number of a plurality of sharers are three, verification of a transaction for a token transaction is not valid.

The first sharer owns private key 1, the second sharer owns private key 2, and the third sharer owns private key 3. The share ratio of the first sharer is 40%, The share ratio of the second is 30%, and The share ratio of the third sharer is 30%. In order for a plurality of sharers to trade shared asset with a seller, there must be a warranty signed with the private keys of all of the first sharer to the third sharer. Referring to FIG. 4, the original warranty was signed with the first sharer and second sharer's private keys, but the signature of the third sharer was not entered to the original warranty. The transaction generating unit 321 generates a first transaction of a first sharer and a second transaction of a second sharer. The transaction combining unit 322 combines the first transaction and the second transaction, and the communication unit 310 transmits the combined transactions to the blockchain network 200. Here, the first sharer terminal and the second sharer terminal transmit their public keys to the blockchain network 200.

Blockchain network 200 decrypts the transaction combined by the transaction combining unit 322 with the public key. The decrypted warranty is entered with the share ratio of 40% of the first sharer and the first sharer's private key, the share ratio of 30% of the second sharer and the second sharer's private key. The private key signature of the third sharer is not entered thereto. In the warranty stored in the smart contract block, the share ratio of 40% of the first sharer, the share ratio of 30% of the second sharer and the share ratio of 30% of the third sharer have been entered.

Blockchain network 200 compares the decrypted warranty with the warranty stored in the smart contract block to verify whether the contents of the warranty such as the share ratio and the sharer's personal information are the same and whether the share ratio has the signature of the sharer's private key.

Since the private key signature of the third sharer is not entered in the decrypted warranty, the blockchain network 200 determines that the transaction is invalid. Therefore, the blockchain network 200 does not transmit tokens existing in the electronic wallet to the purchaser's wallet address.

Fig. 5 is a diagram for generating a transaction.

Fig. 5 shows that when the number of the plurality of sharers are three, a process of generating a transaction for token trading and transmitting the transaction to the blockchain network 200.

**Tx** means transaction, **Pk** means public key, **Sk** means private key (secret key), and **Sig** means signed with private key. **Verify** means verifying the transaction in the blockchain network 200, and **True** means that the transaction is valid as the result of the verification.

The transaction generating unit 321 receives, from the sharer terminal provided on the first sharer side, a warranty in which the share information (50%) of the shared asset of the first sharer and the signature (Sk1) of the first sharer have been entered and generates a first transaction. Here, the communication unit 310 transmits the first transaction to the sharer terminal provided on the second sharer side. In addition, the communication unit 310 receives, from the sharer terminal 100 provided on the second sharer side, a warranty in which share information (30%) of the shared asset of the second sharer side and signature (Sk2) of the second sharer have been entered. The transaction generating unit 321 generates a second transaction based on the received warranty.

In addition, the communication unit 310 transmits the first transaction and the second transaction to the sharer terminal provided on the third sharer side. In addition, the communication unit 310 receives, from the sharer terminal 100 provided on the third sharer side, a warranty in which share information (20%) of the shared asset of the third sharer side and signature (Sk3) of the third sharer side have been entered. The transaction generating unit 321 generates a third transaction based on the received warranty.

The transaction combining unit 322 combines the first to third transactions to generate one transaction. The one transaction generated by the transaction combining unit 322 includes share information and signature information of all sharers. The communication unit 310 transmits the transaction combined by the transaction combining unit 322 to the blockchain network 200. In addition, the sharer terminals 100 provided on the first sharer side, the second sharer side and the third sharer side transmit the public key of each sharer to the blockchain network 200.

Blockchain network 200 decrypts the transaction combined by the transaction combining unit 322 with the public key. In the decrypted warranty, the share ratio of 50% of the first sharer and the signature with the first sharer's private key, and the share ratio of 30% of the second sharer and the signature with the second sharer's private key have been entered. The share ratio of 20% of the third sharer and the signature with the third sharer's private key have also been entered. In the warranty stored in the smart contract block, the share ratio of 50% of the first sharer, the share ratio of 30% of the second sharer, and the share ratio of 20% of the third sharer have been entered.

Blockchain network 200 compares the decrypted warranty with the warranty stored in the smart contract block to verify whether the contents of the warranty such as the share ratio and the sharer's personal information are the same and whether there is the signature of the sharer's private key in the corresponding share ratio.

If the decrypted warranty and the original warranty are the same, the blockchain network 200 determines that the transaction is valid. Accordingly, the blockchain network 200 executes a transaction for token trading and transmits the token existing in the sharer's electronic wallet to the buyer's wallet address.

This method of controlling the blockchain-based shared asset trading system can be implemented as an application or implemented in the form of program instructions that can be executed through various computer components and recorded on a computer-readable recording medium. A computer-readable recording medium may include program instructions, data files, data structures, etc. alone or in combination. Program instructions recorded on a computer-readable recording medium may be those specially designed and configured for the present invention, or may be known and usable to those skilled in the art of computer software.

Examples of computer-readable recording media include magnetic media such as hard disks, floppy disks and magnetic tapes, optical recording media such as CD-ROM and DVD, and magneto-optical media such as floptical disks, and hardware devices specially configured to store and execute program instructions such as ROM, RAM, flash memory and the like.

Examples of program instructions include high-level language codes that can be executed by a computer using an interpreter and the like, as well as machine language codes such as those produced by a compiler. A hardware device may be configured to act as one or more software modules to perform processes according to the present invention and vice versa.

Although the present invention has been described with reference to the above embodiments, it will be understood that those skilled in the art can variously modify and change the present invention within the scope not departing from the spirit and scope of the present invention described in the claims below.

## Claims

1. A blockchain-based shared asset trading system for tokenizing and trading a shared asset, comprising:
a plurality of sharer terminals, provided on a sharer side, for transmitting an original warranty containing the appraisal result of the shared asset and transmitting a warranty in which the sharer's signature has been entered to the original warranty;
a blockchain network for receiving and storing the original warranty in a smart contract block, issuing a token based on the smart contract block and generating an electronic wallet in which the token is stored; and
an electronic wallet management server for receiving the warranty in which the signature has been entered from the plurality of sharer terminals and transmitting a transaction including the warranty in which the signature has been entered and a token trading request to the blockchain network.

2. The system according to claim 1, further comprising a distributed storage in which the original warranty is stored, wherein the distributed storage includes a local storage, a IPFS and a cloud, and is selected as any one of the local storage, the IPFS and the cloud by the at least one sharer terminals.

3. The system according to claim 1, wherein the electronic wallet management server comprises:
a transaction generating unit configured to, when the number of the sharers are two, receive, from a sharer terminal provided on a sharer side, the share information of the shared asset of a first sharer side and a warranty in which the signature of the first sharer side has been entered, so as to generate a first transaction, transmit the share information of the shared asset of the first sharer side and the warranty in which the signature of the first sharer side has been entered to a sharer terminal provided on a second sharer side, and receive, from the sharer terminal provided on the second sharer side, the share information of the shared asset of the second sharer side and a warranty in which the signature of the second sharer side has been entered so as to generate a second transaction;
a transaction combining unit configured to combine the first transaction and the second transaction; and
a communication unit configured to transmit the transaction combined by the transaction combining unit to the blockchain network.

4. The system according to claim 3, wherein when the number of the sharers exceed two, the transaction generating unit is configured to repeatedly perform a process of generating the transactions so as to generate transactions for all sharers, and wherein the transaction combining unit is configured to combine a plurality of transactions generated by the transaction generating unit.

5. The system according to claim 3 or 4, wherein the signature is entered with a private key to the original warranty, and the plurality of sharer terminals are configured to transmit a public key to the blockchain network.

6. The system according to claim 5, wherein the blockchain network is configured to decrypt the transaction combined by the transaction combining unit with the public key, to compare the decrypted warranty with the warranty stored in the smart contract block to verify whether they are the same, to execute, if they are the same, a transaction for token trading and to transmit the token to a buyer's wallet address.

7. The system according to claim 1, wherein the at least one sharer terminals are configured to select the range of intellectual property rights so that the rights are transferred to buyers only within a range of preset intellectual property rights.

8. A method of controlling a blockchain-based shared asset trading system for trading by tokenizing a shared asset, comprising the steps of:
transmitting an original warranty containing the appraisal result of the shared asset and transmitting a warranty in which the sharer's signature has been entered to the original warranty;
receiving and storing, by a blockchain network, the original warranty in a smart contract block, issuing a token based on the smart contract block and generating an electronic wallet in which the token is stored; and
receiving the warranty in which the signature has been entered and transmitting a transaction including the warranty in which the signature has been entered and a token trading request to the blockchain network.

9. The method according to claim 8, wherein the step of receiving the warranty in which the signature has been entered and transmitting a transaction including the warranty in which the signature has been entered and a token trading request to the blockchain network comprises:
when the number of the number of the sharers are two, receiving, from a sharer terminal provided on a first sharer side, the share information of the shared asset of the first sharer side and a warranty in which the signature of the first sharer side has been entered so as to generate a first transaction;
transmitting the share information of the shared asset of the first sharer side and the warranty in which the signature of the first sharer side has been entered to a sharer terminal provided on a second sharer side,
receiving, from the sharer terminal provided on the second sharer side, the share information of the shared asset of the second sharer side and a warrant in which the signature of the second sharer side has been entered so as to generate a second transaction;
combining the first transaction and the second transaction; and
transmitting the combined first and second transactions to blockchain network.

10. The method according to claim 9, wherein the step of receiving the warranty in which the signature has been entered and transmitting a transaction including the warranty in which the signature has been entered and a token trading request to the blockchain network comprises:
when the number of the sharers exceed two, repeatedly performing a process of generating the transactions so as to generate transactions for all sharers;
combining the generated plurality of transactions; and
transmitting the combined transaction to the blockchain network.

11. The method according to claim 9 or 10, wherein the signature is entered with a private key to the original warranty, and the plurality of sharer terminals transmit a public key to the blockchain network.

12. The method according to claim 11, further comprising the steps of:
decrypting the combined first and second transactions with the public key;
comparing the decrypted warranty with a warranty stored in the smart contract block to verify whether they are the same;
if they are the same, executing a transaction for token trading and transmitting the token to a buyer's wallet address.

13. A computer-readable storage medium on which a computer program for performing the method of controlling the blockchain-based shared asset trading system according to any one of claims 8 to 12 is recorded.
